# EUROPEAN PATENT APPLICATION

(11) **EP 4 730 914 A1**
(43) Date of publication of application: **22.04.2026**
(21) Application number: 25209186.3
(22) Date of filing: 16.10.2025
(51) Int. Cl.: H05B 6/00, B60H 1/00

(54) **SURFACE HEATING SYSTEM OF OR FOR A VEHICLE AND METHOD FOR MANUFACTURING SUCH A VEHICLE SURFACE HEATING SYSTEM**

(30) Priority: 17.10.2024 EP 24207290
(71) Applicant: HELLA Saturnus Slovenija d.o.o., 1001 Ljubljana (SI)
(72) Inventor: Jezersek, Nejc, 1230 Domzale (SI); Kogovsek, Janez, 1215 Medvode (SI); Wagner, Andrej, 1000 Ljubljana (SI)
(74) Representative: Behr-Wenning, Gregor

(57) **Abstract**

The present invention relates to a surface heating system (101, 102, 103, 104, 105, 106, 107) of or for a vehicle (12) facing or forming at least partially an accessible surface (14) of the vehicle (12), the surface heating system (10) comprising
- a base body (16) made of a base material and forming a first surface (20) and a second surface (18),
∘ the first surface (20) facing or forming at least a part of the accessible surface (14) of the vehicle (12) and
∘ the second surface (18) facing away from the first surface (20),

- one or more excitation sources (22) providing an excitation field (EF),
- one or more excitable layers (26) arranged in or on the base body (16), the excitable layer (26)
∘ at least partially interacting with the excitation field (EF), consisting of a material that is excitable by the excitation field (EF) and/or comprising particles (28) of a particle material that is excitable by the excitation field (EF), and
∘ the excitation of the excitable material or the particle material resulting in a heat generation inside the excitable layer (26),
and/or

- the base body (16) being formed by an excitable material or comprising particles of a particle material, the excitable material and the particle material
∘ at least partially interacting with the excitation field (EF), and being excitable by the excitation field (EF) and the excitation of the excitable material or the particle material resulting in a heat generation on the first surface (20) and/or on the second surface (18),

wherein the surface heating system (101, 102, 103, 104, 105, 106, 107) is incorporated into or interacting with an accessible surface of a vehicle (12).

Moreover, the present invention relates to a method for manufacturing such a surface heating system and to a vehicle (12) or a vehicle component comprising such a surface heating system.

## Description

The present invention relates to a surface heating system of or for a vehicle, the surface heating system facing or forming at least partially an accessible surface of the vehicle, to a vehicle comprising such a heating system and to a method for manufacturing such a heating system.

### PRIOR ART

Within the present description, an accessible surface can be understood as a surface that is accessible to an end-user of the vehicle under normal operating conditions. Such surfaces can be surfaces of interior vehicle components like armrests, seats or steering wheels. Beyond that, accessible surfaces may be surfaces of exterior vehicle components such as radomes and windscreens.

Exterior surfaces of vehicles are exposed to atmospheric influences. In particular, ice formation on the exterior surfaces has disadvantageous effects on the operation of the vehicle. In case of ice formation on the windowpanes the visibility for the driver is decreasing. Radar and/or lidar is often used in modern vehicles for the detection of objects in the environment of the vehicle. Ice formation on the cover of the respective sensors and/or radomes may lead to false signal readings which may cause improper reactions of the driver assistance system using the data included in the signals. In both cases the probability of accidents is increasing.

It is known to provide for example the rear windowpane with wires, the electrical resistance of which converts the applied electrical energy into heat. As a result, the windowpane is warmed-up and the ice is melted and removed. A similar approach is known for radomes. The cover of the radome is provided with a plurality of thin, barely seen heating wires, thin metal layers or small metal paths (in the following commonly referred to as "wires") connected to an electric circuit. Either automatically or on demand of the driver, electrical energy is provided to the wires thereby heating the cover of the radome. However, there are some drawbacks of such a design. Mainly due to safety reasons in case of a vehicle crash, the radome covers are made of polymers. In particular at the connection pins where the wires are connected to the remaining electric circuit, there is an increased risk of high heat generation which may lead to a local overheating of the polymer. As a result, the polymer is irreversibly deformed and/or degraded.

Additionally, the wiring associated to conventional heating concepts, like resistive heating, typically requires complex design and/or assembling and might be costly, in particular if there are several areas to be heated and require separate wiring paths.

While heating of internal surfaces of a vehicle which are contacted by the passengers has primarily a comfort aspect, the heating of external surfaces often has a safety aspect. In addition, the wear and tear of vehicle components is often increased at lower temperatures.

Primarily in relation to radomes it must be ensured that radar signals can pass through the heated radome cover without major distortions. This is typically achieved by providing the wires only in some areas of the radome cover. In some cases, the radome is illuminated e.g., in a way that the brand logo of the vehicle manufacturer is represented. To this end, some areas of the radome cover are transparent or translucent thereby making the wires visible. The outer appearance of the vehicle is thus adversely affected. Beyond that, only providing the wires in some areas of the radome cover leads to an inhomogeneous heat distribution and reduces the effectivity of the heating such that the ice removal takes longer or is incomplete.

Some of the new heating concepts try to solve the challenge by applying a thin, almost transparent resistive layer on the surface or near the surface to be heated (e.g., inmolded or lacquered on a foil). To this end, carbon nanotubes may be dispersed in a resin. However, an electrically conductive surface is thereby obtained which impairs the radar functionality.

Some components in the vehicle interior can be heated, such as seats or steering wheels, door panels. Also in this case, the respective components are equipped with wires the electrical resistance of which causes a heat formation when a certain current is applied. However, in particular in case of seats, the stress imposed on the wires may cause them to break, thereby impairing their functionality.

Further information on the technical background to which the present disclosure refers is disclosed in US 2024/0060734 A1, US 2024/0255647 A1, DE 10 2010 013 559 B4, US 2024/0024860 A1, US20240006738 A1, US 2022/0361300 A1 and US 2008/0128078 A1.

### DISCLOSURE OF THE INVENTION

It is one task of one embodiment of the present invention to present a surface heating system facing or forming an accessible surface which can be heated without the drawbacks presented above. In particular, the outer appearance of the vehicle component equipped with such a surface heating system should not be adversely affected by the heating elements employed and the heating should be effective and homogenous.

Furthermore, an embodiment of the present invention has the object to provide a vehicle comprising such a surface heating system and a method for manufacturing such a surface heating system.

The task is solved by the features specified in claims 1, 13 and 15. Advantageous embodiments are the subject of the dependent claims.

One aspect of the present invention is directed to a surface heating system of or for a vehicle, the surface heating system facing or forming at least partially an accessible surface of the vehicle, the surface heating system comprising
- a base body made of a base material and forming a first surface and a second surface,
   ∘ the first surface facing or forming at least a part of the accessible surface of the vehicle and
   ∘ the second surface facing away from the first surface,
- one or more excitation sources providing an excitation field,
- one or more excitable layers arranged in or on the base body, the excitable layer
   ∘ at least partially interacting with the excitation field,
      consisting of an excitable material that is excitable by the excitation field and/or
      comprising particles of a particle material that is excitable by the excitation field,
   ∘ the excitation of the excitable material or the particle material resulting in a heat generation inside the excitable layer,
   and/or
- the base body being formed by an excitable material or comprising particles of a particle material, the excitable material and the particle material
   at least partially interacting with the excitation field, and
   being excitable by the excitation field,

   ∘ the excitation of the excitable material or the particle material resulting in a heat generation on the first surface and/or the second surface,
   wherein the surface heating system is incorporated into or interacting with an accessible surface on the first surface and/or the second surface.

The surface heating system of the present invention may be subdivided at least into the following embodiments, namely a first embodiment in which an excitable layer is arranged in or on the base body, a second embodiment in which the base body as such is made of an excitable material and a third embodiment in which particles are incorporated into the base body, the particles being made of a particle material that is excitable. In all cases, an excitation field is needed to initiate heat generation inside the excitable layer or on the first surface and/or on the second surface of the base body.

One of the core ideas of the present invention is that the excitation source and the excitable layer or the excitation source and the particles are interacting via an excitation field and thus in a contactless manner. The arrangement of the excitation source relative to the base body can be freely chosen, provided that the excitation field is still strong enough to sufficiently excite the excitable layer or the particles. The material of the base body may be chosen such that the excitation field can penetrate the base body without or only with a negligible attenuation.

It is therefore not necessary to provide the surface heating system and the vehicle component equipped with the respective surface heating system with visible wires or the like, thereby decreasing the complexity and costs of the manufacture. As no wiring is necessary, it is possible to heat vehicle parts which due to the complexity and costs of the wiring in the prior art could not be heated with reasonable effort. Moreover, one surface heating system can be used to heat more than one vehicle component. The excitable layer may contain nanoparticles which can be applied such that the outer appearance of vehicle component remains unchanged. Moreover, it is not necessary to connect the excitable layer to an electric circuit by means of pins. The danger of a local overheating is reduced.

Due to the absence of wires in the vehicle component, the freedom of design of the vehicle component is thus increased. Moreover, as no wires have to be connected to the electric circuit, the mounting of the vehicle component comprising such a surface heating system is also facilitated. The absence of wires also eliminates the problem that they may break or wear due to the stress imposed on them for example in case of seats.

The base body or parts thereof may be formed by the excitable material or the base body may comprise particles of a particle material, the excitable material and the particle material being excitable by the excitation field. The particles may be embedded into the base material of the base body. In these cases, the excitable layer is formed at least in part by the base body itself without an excitable layer to be applied hereto as an additional layer. The base body may be colored or opaque.

It is not necessary to arrange the excitation source on the base body, it can be arranged inside the base body or mounted on the second surface or arranged spaced from the base body.

The surface heating system according to the present concept enables fine-tuning of the heating performance, e.g., applying more heating material in the areas with higher desired heat output.

The excitation field can be fully or only partially absorbed by the excitable layer and can at least partially pass through the excitable layer. The same is true for the excitable particle material and the excitable material of the base body.

The heat generated in the excitable layer and/or on the first surface and/or on the second surface of the base body is at least partially transmitted to the adjacent layers, in particular the first surface which depending on the arrangement of the surface heating system is part of exterior surface of the vehicle and/or the environmentally induced layer at the exterior surface of the vehicle.

According to another embodiment the excitation field is an electromagnetic field. The creation of an electromagnetic field is fairly simple and can be implemented with small electric or electronic components which do not take up significant design or constructional space.

In an embodiment the electromagnetic field is generated by a radar sensor. As initially mentioned, radar sensors are often used in modern vehicles for the detection of objects in the environment of the vehicle. Radar sensors can also be used as the excitation source. The electromagnetic field generated by the radio waves emitted by the radar sensor can be used for exciting the excitable layer, the excitable material or the particle material. However, it should be noted that a radar sensor can be employed next to the surface heating system, wherein the surface heating system uses other excitation sources.

In a further embodiment the excitable material and/or the particle material consists of or comprises of at least one compound selected from the group consisting of magnetic iron oxides, of superparamagnetic iron oxides, magnetic alloys, magnetic metal oxides and/or metal-doped iron oxides.

In this embodiment MIONs (magnetic iron oxide nanoparticles) and SPIONs (superparamagnetic iron oxide nanoparticles) can be used which have proven to be particularly suited for being excited by an electromagnetic field to generate heat. MIONs refer to the materials that consist of magnetite (Fe3O4) or maghemite (γ-Fe2O3) and have a size ranging from 1 to 100 nm. SPIONs are small synthetic γ-Fe2O3 (maghemite), Fe3O4 (magnetite) or α-Fe2O3 (her-matite) particles with a core ranging from 10 nm to 100 nm in diameter. Other compounds which may be used are MANPs (magnetic alloy nanoparticles) and MMONPs (magnetic metal oxide nanoparticles).

In another embodiment the excitation field is a magnetic or electromagnetic induction field. Induction is a well-known process and used e.g., in induction cooktops to generate heat inside a cooking pot. The construction of the excitation source is simple and basically only requires an induction coil.

In a further embodiment the excitable material and/or the particle material is ferromagnetic, ferrimagnetic and/or ferroelectric. Ferromagnetic, ferrimagnetic and/or ferroelectric materials or respective particles of such materials are extensively excited by the magnetic induction field and thus lead to a very efficient heat generation in the vehicle component. Examples of such ferromagnetic particles are iron, iron oxide, cobalt, nickel, gadolinium, neodymium-iron-boron (Nd2Fe14B) and samarium-cobalt. Examples of ferrimagnetic materials are magnetite (Fe3O4) and nickel-iron-oxide (NiF2O4). Examples of ferroelectric materials are barium titanate (BaTiO3) and lead zirconate titanate.

In a further embodiment the ferromagnetic excitable material and/or the ferromagnetic particle material has a Curie-temperature below the melting temperature or the glass transition temperature of the base material and in particular between 0°C and 300°C and more particularly between 18°C and 150°C. Ferromagnetic materials are magnetic also in the absence of an applied magnetic field. However, ferromagnetic materials are only ferromagnetic below their corresponding Curie temperatures. Once the Curie-temperature is reached, the application of the excitation field does not lead to a further increase in temperature. By choosing a ferromagnetic material having a Curie-temperature below the melting temperature of the base material, as mentioned typically a polymer, a kind of safety mechanism is employed that prevents overheating of the base material without the need to provide temperature sensors or other elements for controlling the temperature in the vehicle component.

In another embodiment the ferromagnetic excitable material and/or the ferromagnetic particle material is magnetic iron oxide, gadolinium, manganese arsenide, chromium (IV) oxide, Ce-Fe-B alloys, La-Ce-Fe-Si-C alloys, Gd-Ge-Si alloys, Mn-Fe-P-As alloys, Fe-V-B-Si alloys and/or Fe-Nd-Cr-B alloys. These compounds offer a Curie-temperature within the range stated above. Thus, an easy adaptation of the Curie-temperature to the base material can be made.

In another embodiment the electromagnetic field is generated by a light source. Light sources can be headlamps, daytime-running lamps, rear lamps, rear-combination lamps, lamps of direction indicators and any lamps used for the decorative illumination of radomes, B-pillars, panels and projections, but also lidar sensors which emit light in the infrared spectrum typically at a wavelength of 905 nm and 1550 nm. This kind of electromagnetic field can also be used for exciting the excitable layer, thereby heating the base body.

In another embodiment the excitable layer or the excitable material comprises photo-thermal materials. The photo-thermal material is able to convert light energy into heat energy. The photo-thermal material can be selectively applied on the base body so that only particular areas are heated. The efficiency of the heating using the excitation field generated by light sources is increased by the photo-thermal material.

In another embodiment the excitable material and/or the particle material consists of or comprises at least one compound selected from the group consisting of metal nanoparticles such as nanoparticles made of gold, silver, copper or copper sulphate, carbon-based materials (e.g., graphene, carbon nanotubes, nanobuds, fullerenes, carbon black), semiconductors (TiO2, copper sulfide, black silicon), organic dyes and polymers (polydopamine, indocyanine green, conjugated polymers). These materials have been proven to be particularly suited for the use in the heating system according to the invention as they increase the conversion of the energy of the used excitation field into heat.

In a further embodiment the surface heating system is incorporated into or interacting with a radome, a headlamp, a vehicle panel, a windscreen, a tire and/or a projector, daylight running light and/or rear lamp. These components typically form an exterior surface of the vehicle which are prone to ice formation and in which ice removal may be critical for safeguarding the related functions. It may also be possible to heat the tires of the vehicle by means of an excitation field. Warmer tires usually have a higher elasticity and thus a better road grip which may lead to an increase operational safety of the vehicle.

In another embodiment the surface heating system is incorporated into or interacting with a seat, an armrest or a steering wheel, panels, front grilles, pillars, bumpers, switches, door gaskets, handles, floors. These components in the vehicle interior and exterior may be heated, however, according to the invention it is not necessary to provide these vehicle components with wires which may break under the load the vehicle components may be exposed to. These and other internal or external cladding components may also be heated by means of an excitation field without the need for the use of wires. The heating of the surfaces of the components in the vehicle interior may help heating the entire passenger compartment, in particular when starting the vehicle at low outside temperatures. The heating system has low manufacturing complexity and low manufacturing costs and increases the comfort for the vehicle passengers.

It might also be beneficial to provide a set of clothing or a blanket containing excitable materials as an added equipment to be worn or used by the user in a vehicle containing such a heating system, so that the clothing is also excited by the excitation source and therefore providing heat for the user. Such clothing may be e.g., gloves, leg warmers, robe, pants and the like containing excitable material.

Another advantage for these components is that a ferromagnetic, ferrimagnetic or ferroelectric excitable material and/or a ferromagnetic particle material with an appropriately low Curie-temperature can be chosen, to prevent damaging of the adjacently arranged material of the seat, armrest or steering wheel by overheating and to prevent burn injuries of the users in the vehicle. Different excitable materials with different Curie-temperatures can be used for different components using the same or different excitation sources, thereby offering a high degree of design freedom.

Another aspect of the invention is directed towards a method for manufacturing a surface heating system according to one of the preceding embodiments comprising the following steps:
- providing a base body made of a base material and forming a first surface and a second surface, and
- applying the excitable layer in or to the base body and in particular to the first surface, either
   ∘ by direct application, or
   ∘ by using a foil, or
   ∘ by treating the first surface by a plasma and by treating the excitable material and/or the particle material by an electric current.

In another embodiment of this method for manufacturing a surface heating system according to one of the preceding embodiments comprises the following steps:
- providing a base body comprising particles of a particle material,
   ∘ the particle material being excitable by the excitation field, and
- mixing the particles into the base material such that they are embedded into the base material before/during formation of the vehicle component.

The excitable layer can be applied to the first surface by known methods which are well understood and well controllable. The excitable layer can be applied to the first surface by printing onto a film or directly onto the first surface, spray-coating, dip-coating, spin-coating, ink-jet printing, hot stamping, painting and/or mixing into the polymer blend/granulate of the base body, to name a few application processes. It is possible that the base body or parts thereof are formed by the excitable material or that the base body comprises particles of a particle material, the excitable material and the particle material being excitable by the excitation field. The particles may be mixed into the base material such that they are embedded into the base material before/during formation of the vehicle component. In the latter cases, the excitable layer is formed at least in part by the base body itself without an additional layer being applied hereto.

According to another embodiment, the method for manufacturing a surface heating system according to one of the preceding embodiments comprises the following steps:
- applying the excitable layer to a foil, and
- forming the base body by inmolding or overmolding the foil.

Alternatively, the method comprises the step of welding or glueing the foil to the base body.

The excitable layer can be applied by welding, glueing, inmolding or overmolding a foil to which suitable materials and/or particles have been applied.

In foil inmolding and overmolding, an already formed/existing foil with a previously applied excitable layer is used. Alternatively, the foil could be made from an excitable material or containing excitable particles. The foil is placed into the molding machine, followed by forming the base body next to the foil. At the end of the process, the foil forms the surface of the base body (one component molding) or an intermediate layer in the base body (two or more component molding).

In case the foil is glued or welded on the base body, then the base body is formed first and then the foil is arranged on top of the base body at the end of the process.

It is not necessary to develop a particular new process so the vehicle component according to the present invention can be provided in a cost-effective and reliable manner.

In a further step, the excitation source can be provided. This can be done more or less simultaneously with the steps mentioned above and on the same production side or at a later stage and on a different production site.

A further aspect of the invention relates to a vehicle or a vehicle component comprising a surface heating system according to one of the embodiments previously discussed.

The technical effects and advantages as discussed with regard to the present surface heating system to a large extent equally apply to the vehicle and the respective vehicle component as such. Briefly, due to the absence of wires in the vehicle component, the freedom of design of the vehicle component is thus increased. Moreover, as no wires have to be connected to the electric circuit, the mounting of the vehicle component is also facilitated.

### PREFERRED EMBODIMENTS OF THE INVENTION

The present invention is described in detail with reference to the drawings attached wherein
- Figure 1: shows a first embodiment of a surface heating system according to the present invention,
- Figure 2: shows a second embodiment of a surface heating system according to the present invention,
- Figure 3: shows a third embodiment of a surface heating system according to the present invention,
- Figure 4: shows a fourth embodiment of a surface heating system according to the present invention,
- Figure 5: shows a fifth embodiment of a surface heating system according to the present invention,
- Figure 6: shows a sixth embodiment of a surface heating system according to the present invention,
- Figure 7: shows a seventh embodiment of a surface heating system according to the present invention, and
- Figure 8: shows a vehicle having at least one vehicle component comprising a surface heating system according to one of the embodiments

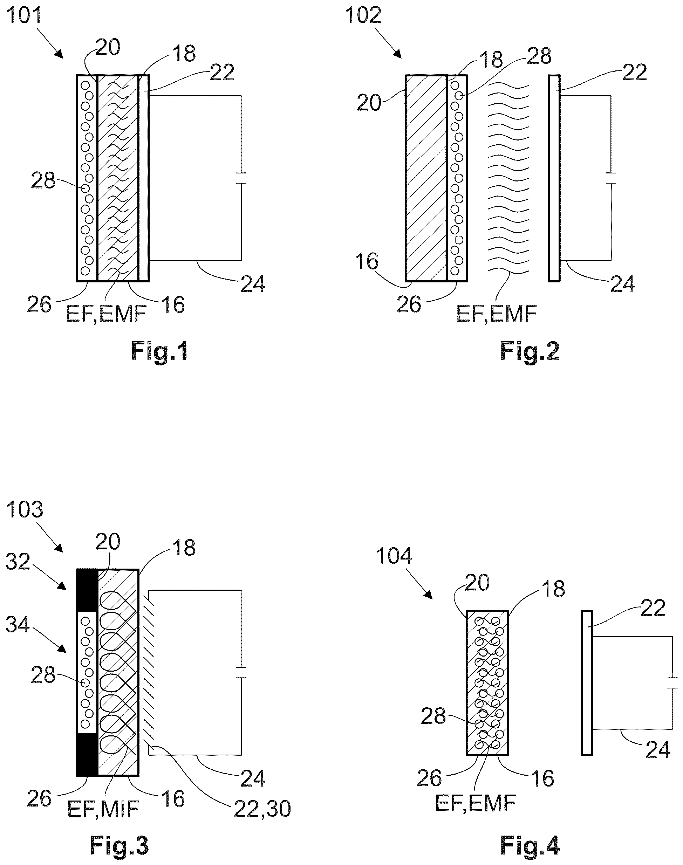

Figure 1 shows a first embodiment of a surface heating system 101 according to the present invention. The surface heating system 101 can be mounted to a vehicle 12 (see Figure 4) or a vehicle component of this vehicle 12 and forms a part of an accessible surface 14 of the vehicle 12 when mounted hereto. The surface heating system 101 comprises a base body 16 that can be made of a polymer like a thermoplastic resin. The base body 16 forms a first surface 20 and a second surface 18. When mounted to the vehicle 12, the first surface 20 forms at least a part of the accessible surface 14 of the vehicle 12 or is facing the accessible surface 14, while the second surface 18 is facing away from the first surface 20.

The surface heating system 101 comprises an excitation source 22 which in the first embodiment is generating an excitation field EF in the form of an electromagnetic field EMF. For this purpose, the excitation source 22 may be provided with a respective generator or sender (not explicitly shown) which produces the respective electromagnetic waves. The excitation source 22 is connected to an electric circuit 24 that may be activatable by a central control unit (not shown) of the vehicle 12. Alternatively, or cumulatively, the excitation source 22 can be activated by the driver or another passenger of the vehicle 12. The excitation source 22 may be fastened to the second surface 18 or mounted to the vehicle 12 body or in the passenger compartment or other areas of the vehicle 12 at a certain distance from the second surface 18 or facing the first surface 20.

An excitable layer 26 is applied to the first surface 20, either completely or partially covering the first surface 20. Even in case the first surface 20 is completely covered by the excitable layer 26, this should not be construed as being in contradiction with the statement that the first surface 20 of the base body 16 is forming at least a part of the accessible surface 14 of the vehicle 12. The first surface 20 predominantly defines the contour or course of the accessible surface 14 within the surface heating system 101 and not or only to a small extent the excitable layer 26 applied thereon. Not shown is an example in which the excitable layer 26 on the first surface 20 is covered with one or more additional layers (e.g. lacquer, leather, coatings). Also in this case the first surface 20 may be part of the accessible surface 14.

In the first embodiment the excitable layer 26 comprises particles 28, in particular nanoparticles 28, that are excitable by the electromagnetic field EMF. The particle material may be magnetic iron oxides, of superparamagnetic iron oxides, magnetic alloys, magnetic metal oxides or metal-doped iron oxides, to name a few. When the excitation source 22 is activated, an electromagnetic field EMF is generated. The electromagnetic waves of the electromagnetic field EMF first impinge on the second surface 18 and then penetrate the base body 16 before they exit the base body 16 via the first surface 20. As mentioned, the base body 16 is made of a thermoplastic material that is permeable to the electromagnetic field EMF or at least has only a small attenuating effect on the electromagnetic field EMF. After exiting the base body 16 via the first surface 20, the electromagnetic waves interact with the particles 28 of the excitable layer 26, thereby causing a heat generation. Ice that has been formed on the first surface 20 or snow that has accumulated on the first surface 20 can be removed.

Figure 2 shows a second embodiment of the surface heating system 102. The heating system 102 according to the second embodiment is to a large extent similar to the heating system 101 according to the first embodiment with the exception that the excitable layer 26 is applied to the second surface 18 and the excitation source 22 is placed at a distance from the base body 16.

Figure 3 shows a third embodiment of the surface heating system 103. In this case the excitation source 22 creates an excitation field EF in the form of a magnetic induction field MIF. The excitation source 22 can comprise an induction coil 30 that is connected to the electric circuit 24. The excitable layer 26 can be subdivided into a first area 32 and a second area 34. In the first area 32, the excitable layer 26 is coherently formed by an excitable material that consists of a ferromagnetic material. In the second area 34, the excitable layer 26 comprises a carrier material into which the particles 28 are embedded. The particle material is a ferromagnetic material, too. For example, the ferromagnetic material may be iron oxide, gadolinium, manganese arsenide, chromium (IV) oxide, Ce-Fe-B alloys, La-Ce-Fe-Si-C alloys, Gd-Ge-Si alloys, Mn-Fe-P-As alloys, Fe-V-B-Si alloys and/or Fe-Nd-Cr-B alloys, to name a few. It should be noted that the ferromagnetic material can be chosen according to its Curie-temperatures above which the material loses its ferromagnetic properties and can thus not be heated anymore above the Curie-temperature by the magnetic induction field MIF. The Curie-temperature may be chosen to be below the melting temperature or glass transition temperature of the base material of the base body 16 to avoid any overheating and degrading of the base material. Or the Curie-temperature may be chosen to not be uncomfortable or dangerous for the touch of the user.

When the excitation source 22 is activated, a magnetic induction field MIF is generated. The magnetic induction field MIF impinges on the second surface 18 of the base body 16, penetrates the base body 16 and exits via the first surface 20. The magnetic induction field MIF is now interacting with the excitable layer 26 leading to a heat generation inside the excitable layer 26. Ice and snow sticking on the base body 16 or the excitable layer 26 can be removed.

For the interaction of the excitation field EF with the excitable layer 26 it should be noted that the excitation field EF can be fully or only partially absorbed by the excitable layer 26 and can at least partially pass through the excitable layer 26.

Figure 4 shows a fourth embodiment of a surface heating system 104 according to the present invention. In this case, the excitation source 22 is located remote from the second surface 18. The distance between the excitation source 22 and the second surface 18 is chosen such that the excitation field EF can interact with the excitable layer 26 or with the base material or with the particle material to a sufficient degree. Moreover, the particles 28 of a particle material that is excitable by the excitation field EF are embedded inside the base material of the base body 16. In the fourth embodiment, the base body itself forms the excitable layer 26. The excitation source 22 may be embodied as a radar sensor.

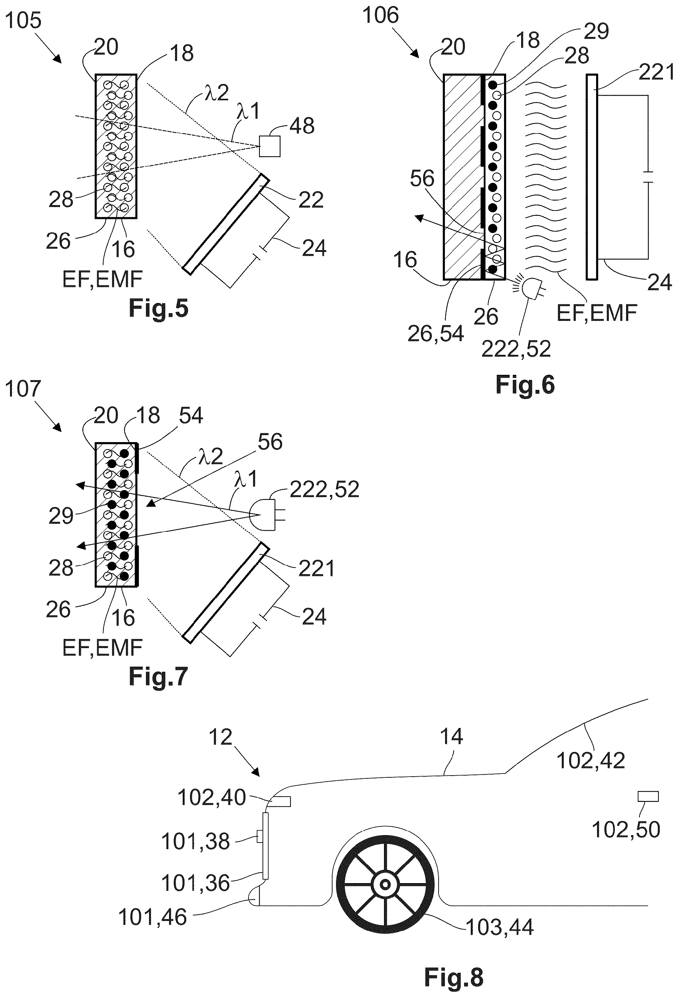

Figure 5 shows a fifth embodiment of the surface heating system 105 along the line with the present invention. The fifth embodiment of the surface heating system 105 is to a large extent similar to the fourth embodiment of the surface heating system 104, however is further equipped with a radar sensor 48 which emits first electromagnetic waves λ1 in the form of radar waves. As noted, the excitation source 22 of the surface heating system 104 may be embodied as a radar sensor 48. In the fifth embodiment of the surface heating system 105, however, the excitation source 22 uses an excitation field **EF** generated by an excitation source 22 different from a radar sensor 48. The excitation source 22 emits second electromagnetic waves λ2 which cause the heating of the base body 16. The excitation source 22 is arranged such that its influence on the first electromagnetic waves λ1 is kept as small as possible.

It should be noted that a radar sensor 48 may also be included in the first embodiment of the surface heating system 101 and the second embodiment of the surface heating system 102.

Figure 6 shows a sixth embodiment of the surface heating system 106. Next to the first excitation source 221, the surface heating system 106 comprises a light source 52, a photothermal material 29 and light-masking and/or light reflecting layer 54 which is in this case applied on the second surface 18 between the base body 16 and the excitable layer 26. The light-masking layer 54 is interrupted by one or more gaps 56. The photothermal material 29 is formed by particles which are embedded into the excitable layer 26.

The light emitted by the light source 52 and impinging on the photothermal material 29 causes a heating of the excitable layer 26 in addition to the heating caused by the first excitation source 221. In this case the light source also acts as a second excitation source 222 and the photothermal material 29 as a second excitable layer 26. A part of the light which impinges on the light-masking layer 54 is reflected back into the excitable layer 26 until it reaches the gaps 56 where the light exits the excitable layer and the surface heating system 106. The surface heating system 106 of the sixth embodiment is particularly suited for illuminated vehicle components. The gaps 56 can be arranged such that a pattern like the logo of the vehicle manufacturer or another decorative shape is created which is illuminated when the light source 52 is turned on.

Not shown is an embodiment in which the photothermal material 29 is incorporated into the light-masking layer 54 or in which the photothermal material 29 forms the light-masking layer 54.

Figure 7 shows a seventh embodiment of the surface heating system 107 which is integrated into a head lamp and thus, as in the sixth embodiment, also comprises a light source 52 which is in this case centrally positioned. In this embodiment, the photothermal material 29 is added to the base body 16. The light that impinges on the photothermal material 29 is converted into heat which adds to the heating of the first surface 20 and or the second surface 18 of base body 16. Also in this case, the light source 52 acts as the second excitation source 222.

Also in the seventh embodiment of the heating system 107 a light-masking layer 54 is provided, however in this case the light-masking layer 54 is applied to the second surface 18 of the base body 16. An application on the first surface 20 is also possible. The light-masking layer 54 of the seventh embodiment of the heating system 107 is not made of or does not comprise photothermal material. Such an option should not be excluded, but in this case the main purpose is of optical and/or decorative nature.

The construction of the base body 16 is the same as in the fourth and fifth embodiment. The first excitation source 221 is arranged such that its influence on the light emitted by the light source 52 is minimized. The excitation field EF generated by the first excitation source 221 interacts with the particles 28 in the described way. Thus, the base body 16 is heated by two different excitation sources 221, 222 generating different excitation fields EF.

In all embodiments of the surface heating system 101, 102, 103, 104, 105, 106, 107 the excitation source 22 and the excitable layer 26 are interacting via an excitation field EF and thus in a contactless manner. The presence of an excitation field EF does not exclude the presence of other similar electromagnetic fields or magnetic induction fields. As an example, the vehicle 12 may be equipped with a radar sensor 48 (see Figure 5) or a lidar sensor (not shown). The inventive surface heating system 101, 102, 103, 104, 105, 106, 107 ensures that the functionality of the radar or lidar sensor is not impaired by the excitation field and/or the design of the surface heating system 101, 102, 103, 104, 105, 106, 107 as such.

Figure 8 shows a vehicle 12 comprising several vehicle components which may be equipped with a surface heating system 101, 102, 103, 104, 105, 106, 107, 104 according to one of the embodiments of the present invention. All the vehicle components form a part of the accessible surface 14 of the vehicle 12. One surface heating system 101 is part of a vehicle panel 36, e.g., the front grill of the vehicle 12. Another surface heating system 101 is integrated into a radome 38 that is mounted to the front grill. Other vehicle components equipped with a surface heating system 101, 102, 103, 104, 105, 106, 107 according to the present invention are embodied as a headlamp 40 and a windscreen 42. Other embodiments of the vehicle components may be tires 44, projectors 46 or handles 50. Other vehicle components may be panels, pillars, bumpers, switches, door gaskets, seats, floors, steering wheels, rear lamps, brand logos, rear view mirrors, charging port covers, gas/diesel fill covers (not shown). Other vehicle components might be any vehicle lamps and/or light emitting surfaces inside or outside the vehicle. Those are any components that benefit in being free of snow or ice, for example, to improve functionality, such as providing information by light projection, in a sense of display or similar. All the mentioned vehicle components 36, 38, 40, 42, 44, 46, 50 may be heated in a contactless manner using an excitation field EF.

### REFERENCE LIST

- 101 - 107: surface heating system
- 12: vehicle
- 14: accessible surface
- 16: base body
- 18: second surface
- 20: first surface
- 22: excitation source
- 24: electric circuit
- 26: excitable layer
- 28: particles
- 29: photothermal material
- 30: induction coil
- 32: first area
- 34: second area
- 36: vehicle panel
- 38: radome
- 40: headlamp
- 42: windscreen
- 44: tire
- 46: projector
- 48: radar sensor
- 50: handle
- 52: light source
- 54: light-masking and/or reflecting layer
- 56: gaps

- EF: excitation field
- EMF: electromagnetic field
- MIF: magnetic induction field
- λ1: first electromagnetic waves
- λ2: second electromagnetic waves

## Claims

1. Surface heating system (101, 102, 103, 104, 105, 106, 107) of or for a vehicle (12) facing or forming at least partially an accessible surface (14) of the vehicle (12), the surface heating system (10) comprising
- a base body (16) made of a base material and forming a first surface (20) and a second surface (18),
∘ the first surface (20) facing or forming at least a part of the accessible surface (14) of the vehicle (12) and
∘ the second surface (18) facing away from the first surface (20),
- one or more excitation sources (22) providing an excitation field (EF),
- one or more excitable layers (26) arranged in or on the base body (16), the excitable layer (26)
o at least partially interacting with the excitation field (EF),
consisting of an excitable material that is excitable by the excitation field (EF) and/or comprising particles (28) of a particle material that is excitable by the excitation field (EF) and
o the excitation of the excitable material or the particle material resulting in a heat generation inside the excitable layer (26),
and/or
- the base body (16) being formed by an excitable material or comprising particles of a particle material, the excitable material and the particle material
o at least partially interacting with the excitation field (EF) and being excitable by the excitation field (EF) and the excitation of the excitable material or the particle material resulting in a heat generation on the first surface (20) and/or the second surface (18),
wherein the surface heating system (101, 102, 103, 104, 105, 106, 107) is incorporated into or interacting with an accessible surface of a vehicle (12).

2. Surface heating system (101, 102, 103, 104, 105, 106, 107) according to claim 1, **characterized in that** the excitation field (EF) is an electromagnetic field (EMF).

3. Surface heating system (101, 102, 103, 104, 105, 106, 107) according to claim 2, **characterized in that** the electromagnetic field (EMF) is generated by a radar sensor (48).

4. Surface heating system (101, 102, 103, 104, 105, 106, 107) according to one of the claims 2 or 3,
**characterized in that** the excitable material and/or the particle material consists of or comprises at least one compound selected from the group consisting of magnetic iron oxides, of superparamagnetic iron oxides, magnetic alloys, magnetic metal oxides and/or metal-doped iron oxides.

5. Surface heating system (101, 102, 103, 104, 105, 106, 107) according to one of the preceding claims,
**characterized in that** the excitation field (EF) is a magnetic induction field (MIF).

6. Surface heating system (101, 102, 103, 104, 105, 106, 107) according to claim 5, **characterized in that** the excitable material and/or the particle material is ferromagnetic, ferrimagnetic and/or ferroelectric

7. Surface heating system (101, 102, 103, 104, 105, 106, 107) according to claim 6, **characterized in that** the ferromagnetic excitable material and/or the ferromagnetic particle material has a Curie-temperature below the melting temperature of the base material.

8. Surface heating system (101, 102, 103, 104, 105, 106, 107) according to one of the claims 6 or 7,
**characterized in that** the ferromagnetic excitable material and/or the ferromagnetic particle material is magnetic iron oxide, gadolinium, manganese arsenide, chromium (IV) oxide, Ce-Fe-B alloys, La-Ce-Fe-Si-C alloys, Gd-Ge-Si alloys, Mn-Fe-P-As alloys, Fe-v-B-Si alloys and/or Fe-Nd-Cr-B alloys.

9. Surface heating system (101, 102, 103, 104, 105, 106, 107) according to one of the preceding claims,
**characterized in that** the excitation field (EF) is generated by a light source (52).

10. Surface heating system (101, 102, 103, 104, 105, 106, 107) according to claim 9, **characterized in that** the excitable layer (26) or the excitable material comprises photo-thermal materials (29).

11. Surface heating system (101, 102, 103, 104, 105, 106, 107) according to claim 10, **characterized in that** the excitable material and/or the particle material consists of or comprises at least one compound selected from the group consisting of metal nanoparticles, carbon-based materials, semiconductors, organic dyes and/or polymers.

12. Surface heating system (101, 102, 103, 104, 105, 106, 107) according to one of the preceding claims,
**characterized in that** the accessible surface is formed by
- a radome (38), a headlamp (40), a vehicle panel (36) or a windscreen (42), a tire (44), a projector (46) and/or
- a seat, an armrest, a headrest, a steering wheel, panels, front grill, pillars, bumpers, switches, door gaskets, handles (50) or floors.

13. Method for manufacturing a surface heating system (101, 102, 103, 104, 105, 106, 107) according to one of the preceding claims, comprising the following steps:
- providing a base body (16) made of a base material and forming a first surface (20) and a second surface (18), and
- arranging the excitable layer (26) in or applying the excitable layer (26) on the base body (16), either
∘ by direct application, or
∘ by using a foil, or
∘ by treating the first surface (20) by a plasma and by treating the excitable material and/or the particle material by an electric current or
- providing a base body (16) comprising particles of a particle material,
∘ the particle material being excitable by the excitation field, and
- mixing the particles into the base material such that they are embedded into the base material before/during formation of the vehicle component.

14. Method according to claim 13, comprising the steps of
- applying the excitable layer (26) to a foil, and
- forming the base body (16) by inmolding or overmolding the foil,
and/or
- welding or glueing the foil to the base body (16).

15. Vehicle (12) or vehicle component (36, 38, 40, 42, 44) comprising a surface heating system (101, 102, 103, 104, 105, 106, 107) according to one of the claims 1 to 12.
